(19) Europäisches Patentamt
European Patent Office
Office européen des brevets

(11) **EP 3 110 043 A1**

(12) **EUROPEAN PATENT APPLICATION**

(43) Date of publication:
**28.12.2016 Bulletin 2016/52**

(51) Int Cl.:
***H04B 10/61*** *(2013.01)*

(21) Application number: **15305959.7**

(22) Date of filing: **22.06.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **ALCATEL LUCENT**
**92100 Boulogne-Billancourt (FR)**

(72) Inventors:
• **GAVIOLI, Giancarlo**
**70435 STUTTGART (DE)**

• **COSTANTINI, Carlo**
**70435 STUTTGART (DE)**
• **CENZATO, Luca**
**70435 STUTTGART (DE)**
• **RAZZETTI, Luca**
**70435 STUTTGART (DE)**

(74) Representative: **Colombo, Stefano Paolo et al**
**Marchi & Partners S.r.l.**
**Via Vittor Pisani, 13**
**20124 Milano (IT)**

Remarks:
Claims filed after the date of filing of the application (Rule 68(4) EPC).

(54) **CARRIER PHASE ESTIMATION AT A COHERENT OPTICAL RECEIVER**

(57) It is disclosed a carrier phase estimation apparatus (135b) comprising: an input connectable to a digital module (134) of a coherent optical receiver (100) to receive a sequence of symbols ($X_i$) representable by phasors; a first phase error estimation module (139) configured to generate first estimated phase errors ($\hat{\varphi}_i$) associated with said sequence of symbols by performing; a second phase error estimation module (140) configured to generate a second estimated phase error ($\phi_{e\text{-}n}$) by an average filtering based on said first estimated phase errors ($\hat{\varphi}_i$).

FIG.3

EP 3 110 043 A1

**Description**

**Technical field**

The present invention relates to the field of optical communication networks. More particularly, the present invention relates to the carrier phase recovery at a coherent optical receiver.

**Background art**

As known, current 100 Gb/s transceivers for optical communication networks employ Polarization-Multiplexed Quadrature-Amplitude-Modulation (PM-QAM) schemes and intra-dyne coherent receivers.

According to a PM-QAM scheme, information (digital) data are transmitted using two different polarizations and, for each polarization, over an in-phase component (I-component) and a quadrature component (Q-component) of an optical signal.

In an intra-dyne receiver, the incoming polarization-multiplexed optical signal is mixed by means of a polarization and phase diversity optical front-end with the signal emitted by a local laser. The local laser frequency is not locked to the incoming signal but might slightly differ by a value much smaller than the modulation symbol rate. The optical front-end typically comprises a pair of optical 90° hybrids, one for each polarization. Each optical 90° hybrid recovers components of the received optical signal at a corresponding polarization.

The components then undergo photoelectric conversion and are mapped into electric signals. The next stage is to convert the electric (analog) signal into digital signals. This is performed by an analog-to-digital converter (ADC), which comprises a sampler that samples the electric signals at a rate equal to or higher than the symbol rate used by the transmitter.

The sampled electric signals are digitally processed for channel equalization and demodulation. Demodulation includes estimating the residual carrier phase (this operation is typically referred to as "carrier recovery").

Carrier recovery is followed by a symbol de-mapper stage, which performs symbol to bit conversion, and by a decoding stage which could be based on a hard-decision forward error correction (FEC).

**Summary of the invention**

The inventors noticed that the known schemes for phase carrier recovery show a significant computational complexity which can prevent their practical implementation for high order quadrature amplitude modulation, such as an example, 64-QAM or higher cardinalities.

In view of the above, it is an object of the present invention to provide an apparatus and a method for phase carrier recovery which show a reduced computational complexity together with satisfying performances, such as an example, phase noise tolerance and sensitivity performance.

According to a first aspect, the present invention provides a carrier phase estimation apparatus comprising:

- an input connectable to a digital module of a coherent optical receiver to receive a sequence of symbols representable by phasors;
- a first phase error estimation module configured to generate first estimated phase errors associated with said sequence of symbols;
- a second phase error estimation module configured to generate a second estimated phase error by an average filtering based on said first estimated phase errors.

Preferably, said second phase error estimation module comprises: a conversion module configured to generate a plurality of error phasors each depending on said first estimated phase errors; an average filtering module configured to compute a filtered error phasor from said plurality of error phasors; and a computing module configured to compute from said filtered phasor the second estimated phase error associated with one of said symbols of the sequence.

Particularly, said average filtering module is configured to compute the filtered error phasor as an average phasor of the plurality of error phasors. As an example, said average filtering module is implemented by a FIR filter. Preferably, the second phase error estimation module is configured to implement a Viterbi and Viterbi phase estimation algorithm algorithm.

In accordance with a first embodiment, the sequence of symbols defines a set of phase values having a first cardinality and said first phase error estimation module is configured to generate the first estimated phase errors by a comparison with a set of test phase values having a second cardinality lower than said first cardinality. Preferably, said first phase error estimation module is configured to implement a Maximum Likelihood Phase Search algorithm.

According to a particular example of said first embodiment, when a Maximum Likelihood Phase Search algorithm the first phase error estimation module preferably comprises: a plurality of test phase blocks structured to provide a plurality of error values and a corresponding plurality of estimated phasors associated with said set of test phase values; a minimum evaluation module structured to determine a minimum error value among said plurality of error values; a selector module configured to provide a selected first estimated phase error associated with an estimated phasor of the plurality of estimated phasors and associated with said minimum error value.

In accordance with a particular embodiment, at least one of the plurality of test phase blocks comprises: a phase rotation module configured to generate a phase rotated phasor by rotating of a test angle an input phasor of said sequence of symbols; a decision block structured to provide from the phase rotated phasor an estimated phasor; a differential module configured to provide a difference value from the phase rotated phasor and the estimated phasor; and a filtering module configured to generate an error value of said of plurality of error values by filtering a plurality of difference values generated by the deferential module and associated with said sequence of symbols.

Preferably, the filtering module of at least one of the plurality of test phase blocks is configured to mitigate an effect of noise present on the sequence of symbols on said of plurality of error values. Particularly, said filtering module is a Finite Impulse Response filter. More particularly, the filtering module is a moving average filter or a cascade of moving average filters.

In accordance with a second embodiment, said first phase error estimation module is configured to operate according to a pilot-based carrier phase estimation and comprises: a complex multiplier configured to multiply said sequence of symbols with pilot symbols and provide a resulting sequence of samples; a filter configured to filter the resulting sequence of symbols to obtain a filtered sequence of samples; a phase extracting module to extract from the filtered sequence of samples said first estimated phase errors.

Preferably, the input of the carrier phase estimation apparatus is configured to receive the sequence of symbols according to a PM-QAM format.

According to a second aspect, the present invention provides a carrier phase estimation method comprising:

- receiving from a digital module of a coherent optical receiver a sequence of symbols representable by phasors;
- generating first estimated phase errors associated with said sequence of symbols;
- generating a second estimated phase error by an average filtering based on said first estimated phase errors.

Preferably, generating the second estimated phase error comprises: converting said first estimated phase errors into a plurality of error phasors; filtering said plurality of error phasors to obtain a filtered error phasor; computing from said filtered phasor the second estimated phase error associated with a respective symbol of said sequence of symbols.

## Brief description of the drawings

The present invention will become clearer by reading the following detailed description, given by way of example and not of limitation, to be read by referring to the accompanying drawings, wherein:

- Figure 1 schematically shows an optical coherent receiver according to embodiments of the present invention;
- Figure 2 schematically shows a digital processing unit for the optical coherent receiver of Figure 1 according to an embodiment of the present invention;
- Figure 3 schematically shows an embodiment of a phase estimation block employable in said digital processing unit and comprising a first phase estimation module and a second phase estimation module 140;
- Figure 4 schematically shows a first embodiment of a test phase block implementable in said phase estimation block;
- Figure 5 shows bit-error ratio (BER) for differentially encoded 64QAM transmission, resulting from comparing by simulation three different cases;
- Figure 6 shows the Q factor penalty as a function of the linewidth times symbol duration product ($\Delta fTs$) for three different simulated cases;
- Figure 7 shows the filter size for three different phase carrier recovery implementations;
- Figure 8 shows a second embodiment of a test phase block implementable in said phase estimation block;

## Detailed description of preferred embodiments of the invention

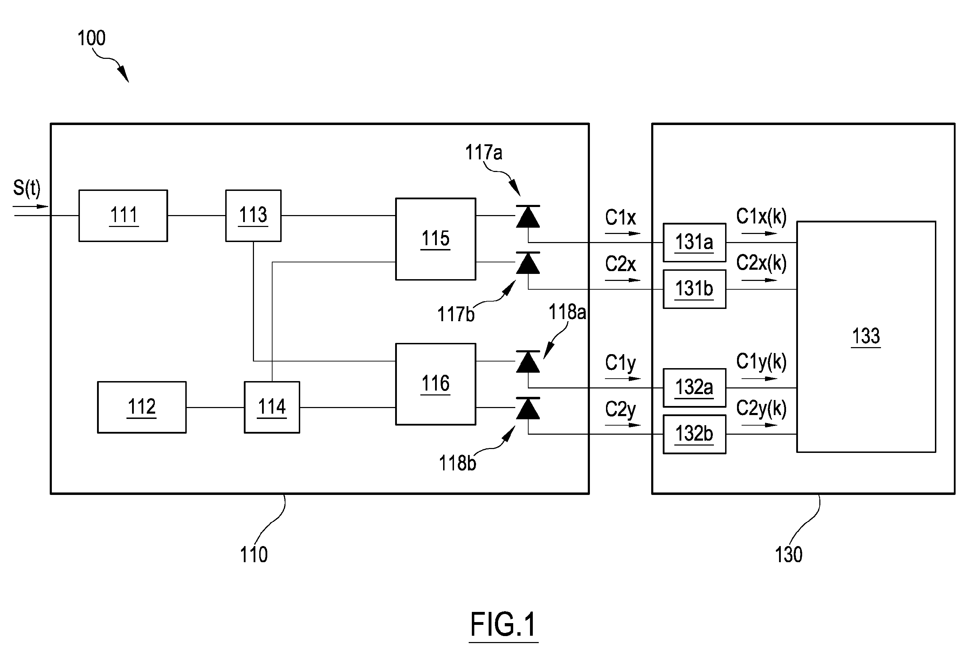

Figure 1 schematically shows an optical coherent receiver 100 according to embodiments of the present invention. Particularly, the optical coherent receiver 100 is an intra-dyne optical coherent receiver.

The receiver 100 is preferably configured to receive from a transmitter (not shown in the Figures) an optical signal modulated according to a digital modulation scheme. As an example, the digital modulation scheme is a PM-QAM (polarization-multiplexed quadrature amplitude modulation) scheme, such as a PM-64QAM scheme. In the following, for sake of non limiting example, it is assumed that the optical signal is modulated according to a PM-QAM scheme. Preferably, the optical signal is a wavelength-division multiplexed (WDM) signal.

In accordance with the example described, the receiver 100 comprises a polarization and phase diversity optical front-end 110 and a digital circuit 130, connected in cascade. The optical front-end 110 preferably comprises a filter 111, a local laser 112, a first polarization beam splitter 113, a second polarization beam splitter 114, a first optical 90° hybrid 115, a second optical 90° hybrid 116 and four balanced-photodiodes 117a, 117b, 118a, 118b.

In operative conditions, the receiver 100, in particular its optical front-end 110, particularly receives an incoming optical signal S(t) which carries information symbols with a symbol rate fs. The incoming optical signal S(t) is then filtered by the filter 111. The filter 111 can be a known channel selector filter. It may select a single wavelength from a WDM signal. Usually it is realized with an array-waveguide grating (AWG) and exhibits Gaussian profile with a bandwidth proportional to the symbol rate (typical ranging from 33GHz to 200GHz). In this particular case, the filter 111 selects a single wavelength $\lambda$ from the received optical signal S(t).

Then, at the output of the filter 111, the filtered optical signal is mixed, in the polarization and phase diversity optical front-end 110, with a light beam emitted by the local laser 112.

It is to be noticed that typically the incoming optical signal S(t) has arbitrary polarization, phase and frequency with respect to the local laser 112. In particular, the local laser frequency is not locked to the incoming signal but might slightly differ by a value much smaller than the symbol rate fs. The optical front end 110 separates the incoming signal S(t) into two components associated with two reference polarization axes of the receiver, i.e. two reference polarization axes of the first polarization beam splitter 113. Each signal component at the output of the polarization beam splitter 113 is combined with the light beam from the local laser 112 and then separated into two phase-orthogonal components using a 90° hybrid circuit, as it will be described herein after. It is then the task of a digital equalizer and a demodulator in the digital circuit 130 to recover from these four signals the I- and Q-components of the two polarizations of the received signal, as it will be clearer herein after.

In particular, the filtered optical signal S(t) is fed to the first beam splitter 113 and is split into two beams of differing polarizations associated with the reference polarization axes of the receiver, which will be indicated as X, Y. Accordingly, these polarizations are referred to, in the following, as X-polarization and Y-polarization. One beam (e.g. the X-polarized beam) is fed to the first optical 90° hybrid 115 and the other beam (e.g. the Y-polarized beam) is fed to the second optical 90° hybrid 116. Similarly, the light beam coming from the local laser 112 is fed to the second beam splitter 114 with 45° polarization angle and is split into two beams of differing polarizations (the same X-polarization and Y-polarization as above). One beam (the X-polarized beam) is fed to the first optical 90° hybrid 115 and the other beam (the Y-polarized beam) is fed to the second optical 90° hybrid 116. In other words, each optical 90° hybrid 115, 116 processes beams of a corresponding polarization.

Each optical 90° hybrid 115, 116 performs, for the corresponding polarization, the beating between the beam resulting from the splitting of the incoming signal S(t) and the beam resulting from the splitting of the light beam generated by the local laser 112. As known, this leads to separate two phase-orthogonal components of the received optical signal S(t) for each polarization. In particular, the first optical 90° hybrid 115 recovers phase-orthogonal components of the received optical signal S(t) for the X-polarization and the second optical 90° hybrid 116 recovers phase orthogonal components of the received optical signal S(t) for the Y-polarization.

The phase-orthogonal components for both polarizations undergo photoelectric conversion within the photodiodes 117a, 117b, 118a, 118b. Each photodiode 117a, 117b, 118a, 118b emits an electric signal for the respective component. The electric signals associated with the phase-orthogonal components for the X-polarization are emitted by the photodiodes 117a, 117b and indicated as C1x, C2x, while, similarly, the electric signals associated with the phase-orthogonal components for the Y-polarization are emitted by the photodiodes 118a, 118b and indicated as C1y, C2y in Figure 1. After photoelectric conversion the electric signals C1x, C2x, C1y, C2y are fed to the digital circuit 130.

The digital circuit 130 preferably comprises four analog-to-digital converters 131a, 131b, 132a, 132b and a digital processing unit 133. The digital circuit 130 is preferably implemented as a digital signal processor (DSP) inside an application-specific integrated circuit (ASIC).

The four analog-to-digital converters 131a, 131b, 132a, 132b preferably process in parallel the electric signals associated with the phase-orthogonal components for the X-polarization, C1x and C2x, and the electric signals associated with the phase-orthogonal components for the Y-polarization, C1y and C2y. Each analog-to-digital converter 131a, 131b, 132a, 132b preferably samples a respective component signal C1x, C2x, C1y, C2y and quantizes the samples so that each sample takes on a value within a finite set, which is determined by the bits of resolution in the analog-to-digital converter 131a, 131b, 132a, 132b. The sequences of quantized samples of the different component signals at the output of the analog-to-digital converters 131a, 131b, 132a, 132b are indicated in Figure 1 by references C1x(k), C2x(k), C1y(k) and C2y(k), respectively, where k is an integer numerical index indicative of the sampling intervals. Preferably the phase-orthogonal component signals C1x, C2x, and C1y, C2y are sampled at a rate equal to the symbol rate fs or higher.

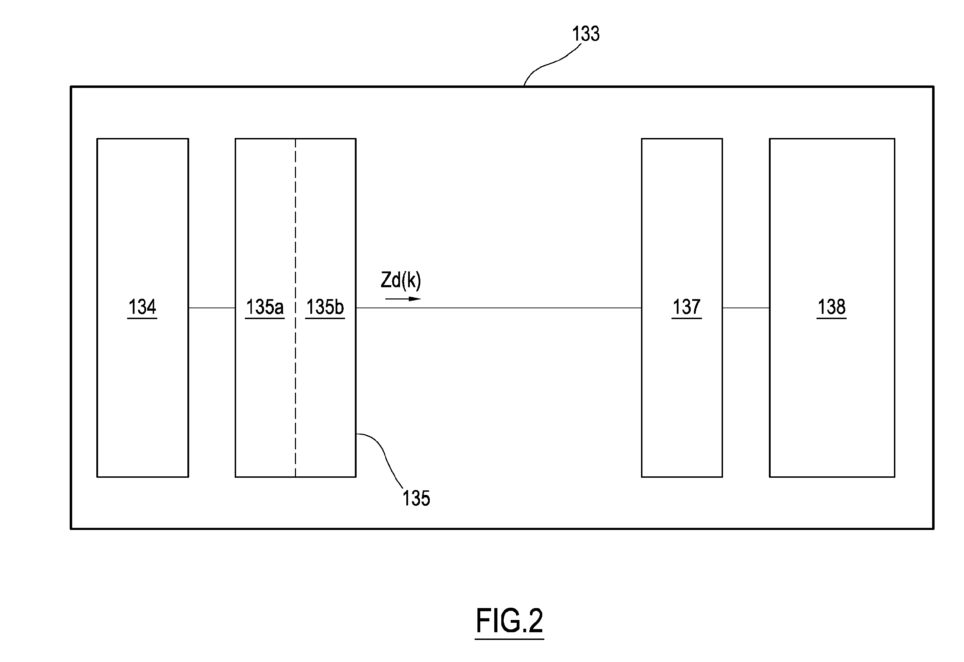

Figure 2 schematically shows a digital processing unit 133 according to an embodiment of the present invention.

The digital processing unit 133 preferably comprises a channel equalizer 134, a demodulator 135, a de-mapper 137 and a decoder 138.

In operative conditions, after analog-to-digital conversion, the phase orthogonal component samples (or, digital signals) C1x(k), C2x(k) and C1y(k), C2y(k) are fed to the channel equalizer 134. The channel equalizer 134 preferably implements known mechanisms for channel equalization, i.e. for compensating transmission impairments such as chromatic dispersion, polarization rotations and polarization mode dispersion (PMD). Therefore, the channel equalizer 134 preferably processes the four digital signals C1x(k), C2x(k) and C1y(k), C2y(k) so that it outputs two complex signals corresponding to the two polarization-multiplexed signals modulated at the transmitter side. Moreover, after channel equalization, samples that are sampled at a sampling rate equal to the symbol rate fs are obtained. The two complex signals at the channel equalizer output will require demodulation to recover phase and frequency drifts between the local laser 112 and the transmitter laser. Demodulation can be performed by two parallel circuits processing each of the two equalizer outputs.

With reference to the block scheme of Figure 2, it is appreciated that the channel equalizer 134 is shared by the two polarizations (which are still combined to this point) and then the receiver processes the two polarizations independently and in parallel, each polarization being processed by the demodulator 135, a de-mapper 137 and the decoder 138.

In accordance with the described example, the demodulator 135 is configured to implement carrier recovery and comprises a frequency estimation block 135a and phase estimation block 135b. The frequency estimation block 135a is structured to recover the frequency error between the local laser 112 and the transmitter laser and can operate according to known techniques. The phase estimation block 135b is structured to recover the phase error of the local laser 112 with respect to the transmitter laser and the channel, as it will be described in greater detail herein after.

An exemplary known algorithm for frequency estimation is described in A. Leven, et al., "Frequency estimation in intradyne reception" IEEE, Photonics Technology Letters, vol. 19, 2007, pp. 366-368.

The demodulator 135, in particular, the phase estimation block 135b, outputs a sequence of demodulated information symbols Zd(k). In the following description, only one polarization will be considered, since processing of the demodulated symbols related to the other polarization is similar.

The de-mapper 137 is preferably configured to perform symbol decision, i.e. to de-map the incoming symbols into a binary sequence (for hard-decision FEC decoding, or HD-FEC) or into information indicating the reliability of the outcome of symbol decision (for soft-decision FEC decoding, or SD-FEC). This information may take the form of a set of log-likelihood ratios (LLRs) associated with the sequence of bits.

The decoder 138 is preferably configured to implement a forward error correction (FEC) technique. The decoder 138, in particular, may implement a hard-decision FEC decoding or a soft-decision FEC decoding.

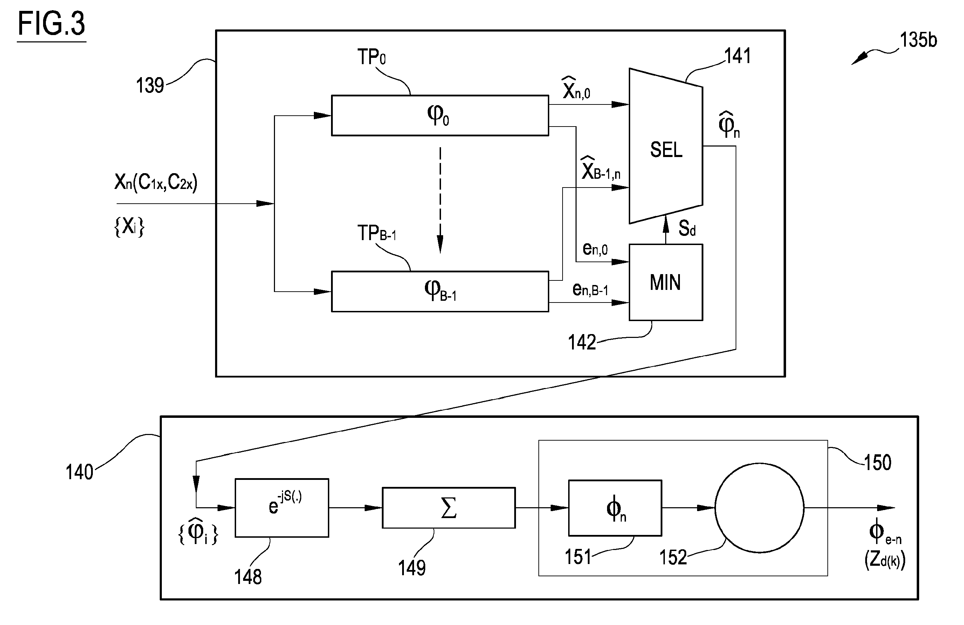

Figure 3 shows a particular embodiment of the phase estimation block 135b, which refers to only one of the two polarizations of the polarization-multiplexed signals modulated at the transmitter side: as an example, reference is made to the X-polarization.

In accordance with the described embodiment, the phase estimation block 135b comprises an input to receive a sequence of symbols $\{X_n\}$ corresponding to phasors (i.e. complex electrical signals) having phase-orthogonal components C1x and C2x, as resulting from the channel equalizer 134. The phasors associated with symbols $\{X_n\}$ define a set of phase values having a cardinality M, i.e. the cardinality of the transmitted PM-QAM signal.

The first phase estimation block 135b comprises a first phase estimation module 139 and a second phase estimation module 140 (PHASE-EST). The first phase estimation module 139 is configured to generate first estimated phase errors ($\hat{\varphi}i$) associated with the received sequence of symbols $\{X_n\}$. Preferably the first phase estimation module 139 performs a coarse phase estimation.

In accordance with a first embodiment, the first phase estimation module 139 is configured to generate estimated phase values $\{\hat{\varphi}_n\}$ associated with the received sequence of symbols $\{X_n\}$ by performing comparison with a set of test phase values $\{\varphi_0, ...\varphi_b, ...\varphi_{B-1}\}$ having a cardinality, B, lower than the above mentioned cardinality M. The estimated phase values $\{\hat{\varphi}_n\}$ represent corresponding error phase values to be corrected. The first phase estimation module 139 is structured to find a coarse estimate of the symbol phase error since it operates with a limited angle resolution. In accordance with an example, the first phase estimation module 139 can be configured according to a Maximum Likelihood Phase Search algorithm (MLPS).

The second phase estimation module 140 is configured to generate an estimated phase error by an average filtering based on the estimated phase values $\{\hat{\varphi}_n\}$ provided by the first phase estimation module 139. Preferably, the second phase estimation module 140 allows to obtain a fine phase estimation and increases the quality of the coarse estimation made by the first phase estimation module 139, by reducing a decision error rate obtainable by the sole first phase estimation module 139.

With the term "average filtering" is meant any filtering process which is also capable of attenuating or removing abrupt phase transitions which are, in the present case, associated with the limited angle resolution of the first phase estimation module 139.

In accordance with an example, the second phase estimation module 140 comprises a conversion module 148, an average filtering module 149 and an angle computing module 150. As an example, the angle computing module 150 includes an angle conversion module 151 and an unwrapping module 152.

The conversion module 148 is configured to generate a plurality of error phasors $F_n$ each depending on said first estimated phase values $\{\hat{\varphi}_n\}$. The average filtering module 149 is configured to compute a filtered error phasor $F_{av}$ from said plurality of error phasors $F_n$ and the computing module 150 is configured to extract a second estimated phase error from said filtered error phasor $F_{av}$.

In accordance with a preferred embodiment, the cascade of the conversion module 148, average filtering module 149 and the computing module 150 can be configured to operate according to the Viterbi & Viterbi algorithm as described in A. J. Viterbi and A. M. Viterbi, "Nonlinear estimation of PSK-modulated carrier phase with application to burst digital transmission," IEEE Trans. Inform. Theory, vol. 29, pp. 543-551, Jul. 1983.

In accordance with the particular example shown in Figure 3, the first phase estimation module 139 is structured to operate according a MLPS technique and is provided with a plurality of test phase blocks $TP_0$-$TP_{B-1}$, a selector module 141 (SEL) and a minimum evaluation module 142 (MIN). It is observed that the number B of the test phase blocks $TB_0$-$TP_{B-1}$ is lower than the cardinality M of the transmitted PM-QAM signal. As an example, for PM-64-QAM transmitted signals the number of the test phase blocks $TB_0$-$TP_{B-1}$ can be B =16.

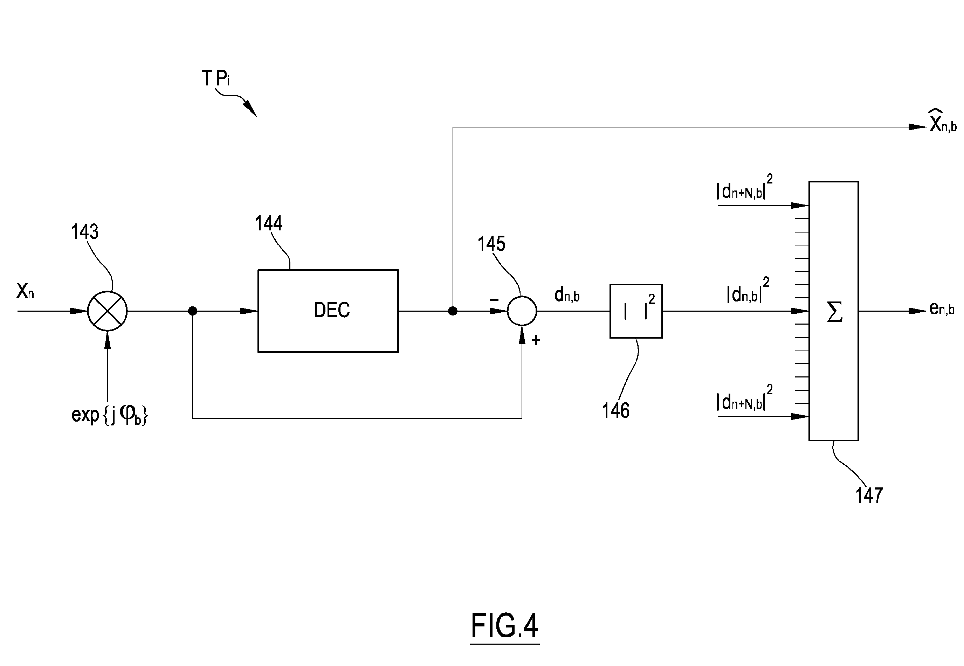

An example of one of the plurality of test phase blocks $TP_0$-$TP_{B-1}$ is shown in Figure 4, with reference to a generic b-th test phase block $TP_b$. The phase test phase block $TP_b$ comprises a phase rotation module 143, a decision circuit 144 (DEC), a differential node 145, a distance computational module 146 and a filtering module 147. The phase rotation module 143 is configured to cause a rotation of a test *angle* $\varphi_b$ of the corresponding input signal.

The text angle $\varphi_b$ is chosen according to the following expression (1)

$$\varphi_b = \left( \frac{b}{B} - \frac{1}{2} \right) \gamma \qquad (1)$$

$$b \in \{0,1,....B-1\}$$

Where $\gamma$ is the angular symmetry size of the interval in which the carrier phase error is searched. Hence, the difference between two neighbor test angles (e.g. $\varphi_b$ and $\varphi_{b+1}$) is $\Delta\varphi = \gamma/B$. It is observed that the angular symmetry size $\gamma$ is equal to the symmetry angle of the QAM constellation, i.e. $\gamma = \frac{1}{2}\pi$ for 64QAM.

The decision circuit 144 is configured, as an example, to operate by extracting the symbol complex components using combinatorial logic.

Particularly, the filtering module 147 can be a Finite Impulse Response (FIR) filter. As an example, the filtering module 147 can be based on block or moving averaging (MA); a moving average filter could employ all equal coefficients. The choice of the taps length of the FIR filter of the filtering module 147 depends on the laser linewidth times symbol rate product.

In accordance with another embodiment, the filtering module 147 comprises a cascade of constant-coefficients filters and shows the following impulse response $W_k$:

$$W_k = \sum_{m=-N}^{N} V_{k-m} \qquad V_k = \sum_{m=-N}^{N} U_{k-m} \qquad (2)$$

With reference to the operation of the phase estimation block 135b, a symbol $X_n$ is supplied to the first phase estimation module 139, as shown in Figure 3, which operates by searching the phase angle corresponding to the minimum filtered error value computed over the B different test angles.

In greater detail, the plurality test phase blocks $TP_0$-$TP_{B-1}$ receive the symbol $X_n$. With reference to the b-th test phase block $TP_b$ (Figure 4), it receives the symbol $X_n$ which is rotated by the test angle $\varphi_b$ and is fed into the decision circuit 144.

Then, all the rotated symbols are fed into the decision circuit 144, which provides estimated phasors $\hat{X}_{n,b}$. Moreover, the computational module 146 computes in the complex plane a distance (e.g. absolute/norm distance or squared distance) to the closest constellation point. As an example, squared distance $|d_{n,b}|^2$ is computed:

$$\left| d_{n,b} \right|^2 = \left| X_n\, e^{j\varphi_b} - \widehat{X_{n,b}} \right|^2 \qquad (2a)$$

Subsequently, the above distances $|d_{n,b}|^2$ of 2N+1 test symbols (representing errors computed employing the same test angle $\varphi_b$) are processed by the filtering module 147 which mitigates the impact of the noise present on the input signals $X_n$ and produces a filtered error value $e_{n,b}$. Particularly, the filtering module 147 ca be a (2N+1)-taps Finite Impulse Response (FIR) filter:

$$e_{n,b} = \sum_{m=-N}^{N} \left| d_{n-m,b} \right|^2 \qquad (2b)$$

Each test phase block $TP_0$-$TP_{B-1}$ provides a corresponding filtered error value $e_{n,0},...e_{n,b},...e_{n,B-1}$ to the minimum evaluation module 142 and a corresponding estimated phasor $\hat{X}_{n,0},...\hat{X}_{n,b}, ...\hat{X}_{n,B-1}$: to the selector module 141 (Figure 3). The minimum evaluation module 142 determines the minimum error among the ones provided by the test phase blocks $TP_0$-$TP_{B-1}$ and sends a corresponding selection signal Sd to the selector module 141 which selects a corresponding estimated phasor $\hat{X}_n$. Moreover, the selector module 141 outputs a phase angle $\hat{\varphi}_n$, representing an error phase, associated with the selected estimated phasor $\hat{X}_n$.

With reference to consecutive input symbols $\{X_i\}$, the first phase estimation module 139 generates as above described a plurality of estimated phase angles

$$\{\widehat{\varphi}_i\} \qquad (3)$$

(including the particular estimated phase angle $\hat{\varphi}_n$), each representing an estimated phase obtained for the corresponding symbol at the input of the phase estimation block 135b, in a manner analogous to the one above described with reference to estimated phase angle $\hat{\varphi}_n$.

Particularly, the estimated phase angles according to expression (3) are provided to the second phase estimation module 140, which operates to complete the coarse phase estimation made by the first phase estimation module 139.

The conversion module 148 multiplies by a factor S each of the entering filtered estimated phase angles $\{\hat{\varphi}_i\}$ so obtaining phase signals $\varphi_i = S\,\hat{\varphi}_i$. Particularly, the factor S depends on the above mentioned angular symmetry size "$\gamma$" of the signal constellation PM-QAM and is given by the following expression:

$$S\,\gamma = 2\pi \qquad (4)$$

A an example, for the case of constellation with angular symmetry size $\gamma=\frac{1}{2}\pi$ (QPSK, 16QAM and 64QAM), the factor S is equal to 4. For the case of angular symmetry size $\gamma=\pi$ (e.g. 8QAM and BPSK), the factor S is equal to 2.

Moreover, the conversion module 148 converts the corresponding input signals, representative of phase angle errors, into a plurality of corresponding phasors $\{F_i = e^{-j\varphi_i}\}$.

The 2N+1 phasors $\{F_i = e^{-j\varphi_i}\}$ are fed to the average filtering module 149 which computes a filtered phasor $Fav_n$. As an example, the average filtering module 149 (which can be a FIR filter of length 2N+1) performs an average of the 2N+1 phasors $\{F_i = e^{-j\varphi_i}\}$ by implementing a summation of the sequence of phasors. According to another example the average filtering module 149 can be implemented by a sliding-block approach.

Particularly, if the second phase estimation module 140 is implemented according to the above mentioned Viterbi & Viterbi algorithm, its output can be expressed as:

$$Fav_n = \sum_{i=k-N}^{n+N} e^{-j\varphi_i} \qquad (5)$$

$$\phi_n = \arg(Fav_n)$$

Where the average phasor $Fav_n$ is computed as a summation of the phasors $F_i = e^{-j\varphi_i}$ and $\phi_n$ is the phase of the average phasor $Fav_n$. So, according to expression (5) the average filtering module 149 operates on the phasors $e^{-j\varphi_n}$ obtained by the coarse estimation performed by the first phase estimation module 139 and does not operates directly on the input phasors $X_n$.

The angle conversion module 151 extracts the estimated phase angle $\phi_n$ from the average phasor $F_{av}$ and multiplies it by the factor S so obtaining a phase value $S\,\phi_n$, which falls in an angular range:
$(-45°,\ 45°]$ or $(-90°,\ 90°]$

depending on S.

The unwrapping module 152 expresses the estimated phase angle S$\phi_n$ in to the range *(-180°:180°],* so providing the estimated phase error $\phi_{e-n}$ for the input symbol $X_n$ which can be subtracted from the input signal phase to obtain the sequence of demodulated information symbols Zd(k). It is observed that the multiplication by the factor S gives rise to an S-fold ambiguity in the phase estimate which can be resolved by differential encoding.

In a second embodiment, the first phase estimation module 139 is configured to perform the coarse carrier phase estimation by operating according to a pilot-based scheme.

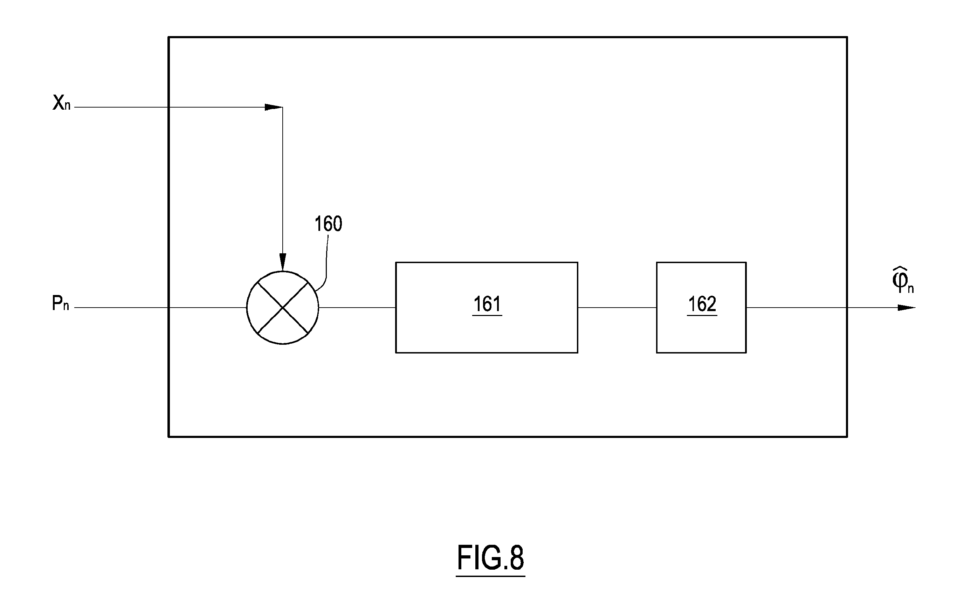

An example of the first phase estimation module 139, designed according to a pilot-based scheme, is shown in Figure 8 and comprises a complex multiplier 160, a filter 161 and a phase extracting module 162. The filter 161 is preferably a moving average interpolation filter. The complex multiplier 160 is configured to multiply the incoming symbols $X_n$ with the complex conjugate of a symbol sequence $P_n$.

The symbol sequence $P_n$ includes pilot symbols whose value is known at the receiver 100. Pilot symbols are time interleaved with information symbols to generate the transmitted signal. The position of pilot symbols within the received symbol sequence is also known at the receiver.

Particularly, the symbol sequence $P_n$ can be a zero-padded sequence comprising zeros in time intervals corresponding to non-pilot symbol transmission. Given that the pilot symbol periodicity is N, each pilot symbol occurs at a discrete time instant i·N, where i is an integer number equal to or higher than 0. Hence, the zero-padded sequence of reference symbols may be expressed as:

$$P_n=X_n \qquad \text{for n=i·N}$$
$$P_n=0 \qquad \text{for n≠i·N}$$

where $X_n$ is the symbol sequence at the transmitter side.

In accordance with the given example, the resulting sequence of samples is then filtered by the moving average interpolation filter 161 and phase extracting module 162 takes the argument of the samples at the output of the interpolation filter 161. It is observed that the above described phase estimation block 135b allows performing phase carrier recovery by a reduced computational complexity in comparison with the known techniques and offering satisfying phase noise tolerance and sensitivity performance.

Particularly, with reference to a phase estimation based on the MLPS architecture, which employs M= 64 test angle blocks, the phase estimation block 135b reduces the number of required test angles by a factor 4: indeed only B=16 test angle blocks can be employed.

Moreover, it is observed that the length of the filtering modules 147 implemented in the test phase blocks TP$_0$-TP$_{B-1}$ and the decision metrics of the decision circuit 144 are reduced when compared with an architecture based on a full MLPS approach.

A further computational complexity reduction is connected to the fact that the average filtering module 149 is shared by all the test phase blocks TP$_0$-TP$_{B-1}$.

It is noticed that the described phase estimation correction apparatus 135b is less complex than known estimators employing Maximum Likelihood algorithm since the fine phase estimation performed by the computing module 150 is performed on the symbol phase errors, provided by the first phase estimation module 139, and is not performed directly on the received modulated symbols.

The Applicant has carried out computer simulations to analyse performances and characteristics of the phase estimation block 135b including the average filtering module implemented in accordance with the equation (5).

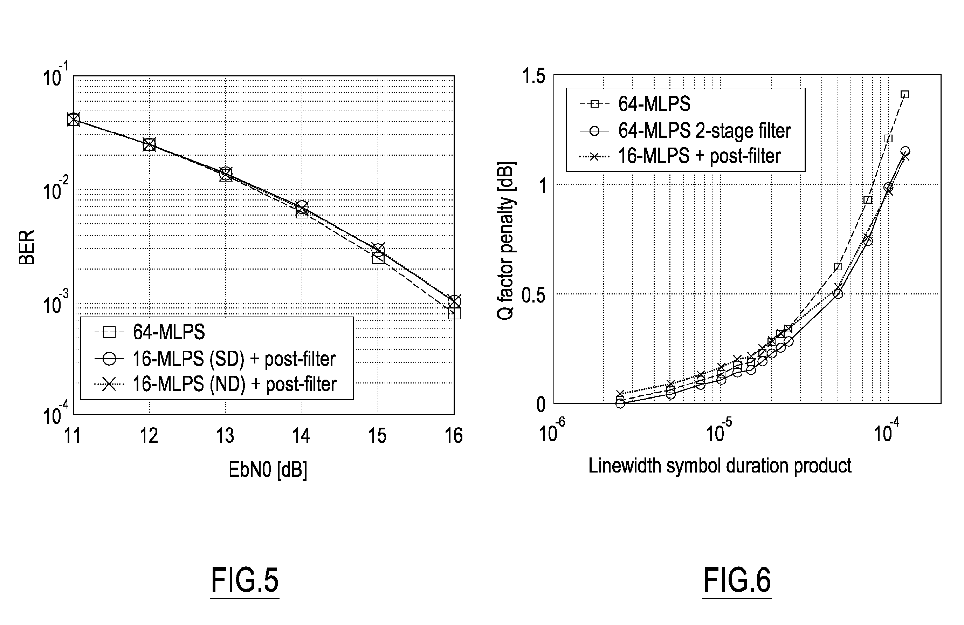

Figure 5 shows the bit-error ratio (BER) for differentially encoded 64QAM transmission, resulting from comparing three different cases.

The first case (line "64-MLPS") refers to the known MLPS algorithm operated with 64 test phase angles and in which the MLPS phase error is computed using the square distance (SD) metrics.

The second case, line "16-MLPS (SD)-post-filter", refers to the described phase estimation block 135b with 16 test phase angles and in which the MLPS the phase error is computed using the square distance (SD) metrics.

The third case, line "16-MLPS (ND)+post-filter", refers to the described phase estimation block 135b with 16 test phase angles and in which the MLPS the phase error is computed using the simpler absolute distance or norm distance (ND) metrics.

Furthermore, in the first case each of the 64 test-angle filters is based on the two-stage MA filter as in equation (2), while in the second and third case each of the 16 test-angle filters is based on a single-stage MA filter.

It is observed that, in the BER threshold range of soft-decision FEC, demodulation based on the second and third cases is achieved with no further SNR penalty with respect to the MLPS architecture operating with 64 test of the first case.

Figure 6 shows the Q factor penalty as a function of the linewidth times symbol duration product (ΔfTs) for three different cases, assuming an SNR of 12dB.

The first case (line "64-MLPS") refers to the known MLPS algorithm operated with 64 test phase angles each employing a single MA filter.

The second case (line "64-MLPS 2-stage filter) refers to the known MLPS algorithm operated with 64 test phase angles each employing a two-stage MA filter as in equation (2).

The third case, line "16-MLPS+post-filter", refers to the described phase estimation block 135b with 16 test phase angles each employing a single MA filter.

In the results of Figure 6 the filter block length is optimized for each different linewidth value independently for each investigated case. As expected, the use of cascaded filter better suits the frequency response of the laser phase noise, leading to larger phase noise tolerance. It can be noticed that, in presence of phase noise, the configuration of the described phase estimation block 135b (line "16-MLPS+post-filter") performs as the MLPS algorithm operating with 64 test phase filters with two-stage MA filter architecture. A penalty lower than 0.1 dB occurs at $\Delta fTs$ much smaller than $10^{-5}$, which at 40GBaud corresponds to a input laser linewidth close to 100kHz, which is hardly achievable with commercially available WDM tunable lasers. Furthermore, significant linewidth broadening is to be expected after transmission due to fiber non-linearity.

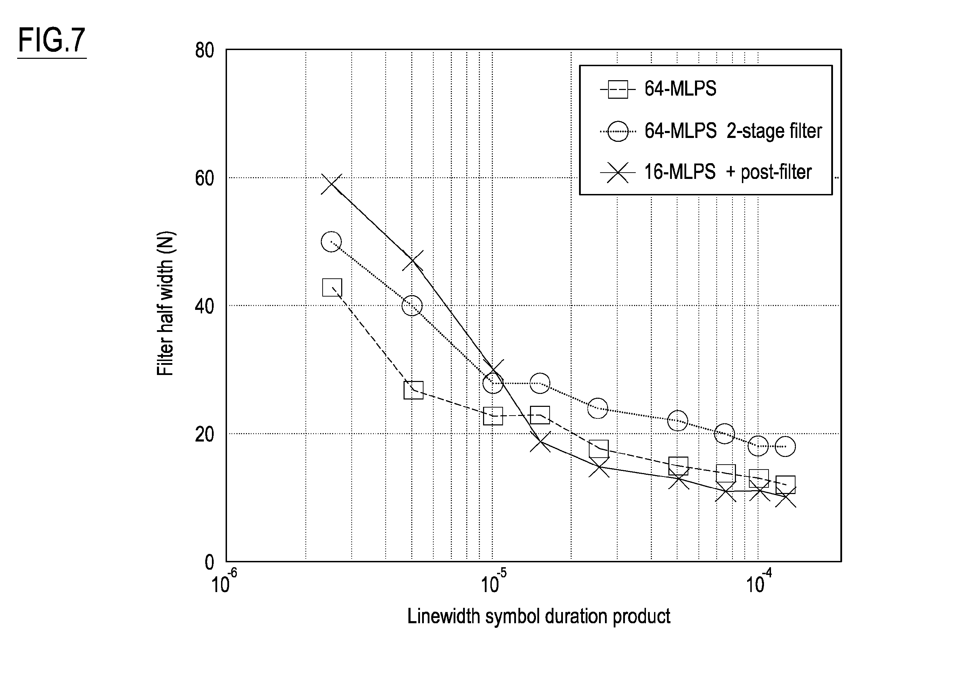

Figure 7 shows the filter size corresponding to the results plotted in Figure 5 and 6, which is the optimum filter size to achieve the lowest BER as a function of the linewidth times symbol duration product at an SNR of 12dB. In the case of 2-stage MA filters architecture (line "64-MLPS" and line "64-MLPS 2-stage filter"), the plot reports the length of the combined impulse response. For the case of the described phase estimation block 135b (line "16-MLPS+post filter), Figure 7 only reports the size the average filtering module 149 as the optimal size for the test-angle filters was found to be around N = 12 taps independently of the additive phase noise. On the contrary the size of average filtering module 149 depends on the frequency content of phase noise and follows the same behavior of the test-angles filters for the known MLPS configuration. It is evident that the use of the average filtering module 149 reduces significantly the size of the parallel test-angle filters with respect to the known MLPS algorithm especially at low phase noise, at the cost of introducing a single stage of filtering after the MLPS decision which is shared among all test angle cases. This leads to a significant computational reduction as each test phase requires a dedicated test-angle filter to compute the MLPS phase search.

The functions of the various elements shown in Figures 1-3, 6, 8, 9, including any functional blocks referred to as "device", "unit", "block", "module", "circuit" or "processing unit", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the terms "processing unit", "device", "block", "module", "circuit" or "unit" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

**Claims**

1. A carrier phase estimation apparatus (135b) comprising:

   - an input connectable to a digital module (134) of a coherent optical receiver (100) to receive a sequence of symbols ($X_i$) representable by phasors;
   - a first phase error estimation module (139) configured to generate first estimated phase errors ($\hat{\varphi}_i$) associated with said sequence of symbols;
   - a second phase error estimation module (140) configured to generate a second estimated phase error ($\phi_{e-n}$) by an average filtering based on said first estimated phase errors ($\hat{\varphi}_i$).

2. The estimation apparatus of claim 1, wherein said second phase error estimation module (140) comprises:

   - a conversion module (148) configured to generate a plurality of error phasors ($F_i$) each depending on said first estimated phase errors ($\hat{\varphi}_i$);
   - an average filtering module (149) configured to compute a filtered error phasor ($F_{av}$) from said plurality of error phasors ($F_i$);
   - a computing module (150) configured to compute from said filtered phasor ($F_{av}$) the second estimated phase error ($\phi_{e-n}$) associated with one of said symbols of the sequence.

3. The estimation apparatus of claim 2, wherein said average filtering module (149) is configured to compute the filtered error phasor ($F_{av}$) as an average phasor of the plurality of error phasors ($F_i$).

4. The estimation apparatus of claim 3, wherein said average filtering module (149) is implemented by a FIR filter.

5. The estimation apparatus of claim 2, wherein said second phase error estimation module (140) is configured to implement a Viterbi and Viterbi phase estimation algorithm.

6. The estimation apparatus of claim 1, wherein:

   - the sequence of symbols ($X_i$) defines a set of phase values having a first cardinality;
   - said first phase error estimation module (139) is configured to generate the first estimated phase errors ($\hat{\varphi}_i$) by a comparison with a set of test phase values $(\varphi_0, \varphi_{B-1})$ having a second cardinality lower than said first cardinality.

7. The estimation apparatus of claim 6, wherein said first phase error estimation module (139) is configured to implement a Maximum Likelihood Phase Search algorithm.

8. The estimation apparatus of claim 7, wherein the first phase error estimation module (139) comprises:

   - a plurality of test phase blocks ($TP_0$-$TP_{B-1}$) structured to provide a plurality of error values ($\mathbf{e_{n,0}}$, $\mathbf{e_{n,B-1}}$) and a corresponding plurality of estimated phasors ($\hat{\mathbf{X}}_{n,0},... \hat{\mathbf{X}}_{n,b}, ...\hat{\mathbf{X}}_{n,B-1}$) associated with said set of test phase values;
   - a minimum evaluation module (142) structured to determine a minimum error value among said plurality of error values ($\mathbf{e_{n,0}}$, $e_{n,B-1}$);
   - a selector module configured to provide a selected first estimated phase error ($\hat{\varphi}_i$) associated with an estimated phasor of the plurality of estimated phasors and associated with said minimum error value.

9. The estimation apparatus of claim 8, wherein at least one of the plurality of test phase blocks ($TP_0$-$TP_{B-1}$) comprises:

   - a phase rotation module (143) configured to generate a phase rotated phasor by rotating of a test angle ($\varphi_b$) an input phasor of said sequence of symbols ($X_i$)
   - a decision block (144) structured to provide from the phase rotated phasor an estimated phasor ($\hat{\mathbf{X}}_{n,0},...$);
   - a differential module (145, 146) configured to provide a difference value $(d_{n,b}\; ; |\mathbf{d_{n,b}}|^2)$ from the phase rotated phasor and the estimated phasor ($\hat{\mathbf{X}}_{n,0}$);
   - a filtering module (147) configured to generate an error value ($\mathbf{e_{n,b}}$) of said of plurality of error values ($\mathbf{e_{n,0}}$, $e_{n,B-1}$) by filtering a plurality of difference values ($d_{n,b}$) generated by the differential module (145, 146) and associated with said sequence of symbols.

10. The estimation apparatus of claim 9, wherein said filtering module (147) is configured to mitigate an effect of noise present on the sequence of symbols on said of plurality of error values.

11. The estimation apparatus of claim 10, wherein said filtering module (147) is a Finite Impulse Response filter or a moving average filter or comprises a cascade of moving average filters.

12. The estimation apparatus of claim 1, wherein said first phase error estimation module (139) is configured to operate according to a pilot-based carrier phase estimation and comprises:

   - a complex multiplier (160) configured to multiply said sequence of symbols with pilot symbols and provide a resulting sequence of samples;
   - a filter (161) configured to filter the resulting sequence of symbols to obtain a filtered sequence of samples;
   - a phase extracting module (162) to extract from the filtered sequence of samples said first estimated phase errors ($\hat{\varphi}_i$).

13. The estimation apparatus of claim 1, wherein said input is configured to receive the sequence of symbols ($X_i$) according to a PM-QAM format.

14. A carrier phase estimation method comprising:

- receiving from a digital module (134) of a coherent optical receiver (100) a sequence of symbols ($X_i$) representable by phasors;
- generating first estimated phase errors ($\hat{\varphi}_i$) associated with said sequence of symbols;
- generating a second estimated phase error ($\phi_{e\text{-}n}$) by an average filtering based on said first estimated phase errors ($\hat{\varphi}_i$).

**15.** The carrier phase estimation method of claim 17, wherein generating a second estimated phase error comprises:

- converting said first estimated phase errors ($\hat{\varphi}_i$) into a plurality of error phasors ($F_i$);
- filtering said plurality of error phasors ($F_i$) to obtain a filtered error phasor ($F_{av}$);
- computing from said filtered phasor ($F_{av}$) the second estimated phase error ($\phi_{e\text{-}n}$) associated with a respective symbol of said sequence of symbols.

**Amended claims in accordance with Rule 137(2) EPC.**

**1.** A carrier phase estimation apparatus (135b) comprising:

- an input connectable to a digital module (134) of a coherent optical receiver (100) to receive a sequence of symbols ($X_i$) representable by phasors, said phasors associated with said symbols ($X_i$) defining a set of phase values having a cardinality M;
- a first phase error estimation module (139) configured to generate first estimated phase errors ($\hat{\varphi}_i$) associated with said sequence of symbols by performing a comparison with a set of test phase values ($\{\varphi_0, \dots \varphi_b, \dots, \varphi_{B\text{-}1}\}$) having a cardinality B lower than said cardinality M;
- a second phase error estimation module (140) configured to generate a second estimated phase error ($\phi_{e\text{-}n}$) by an average filtering based on said first estimated phase errors ($\hat{\varphi}_i$).

**2.** The estimation apparatus of claim 1, wherein said second phase error estimation module (140) comprises:

- a conversion module (148) configured to generate a plurality of error phasors ($F_i$) each depending on said first estimated phase errors ($\hat{\varphi}_i$);
- an average filtering module (149) configured to compute a filtered error phasor ($F_{av}$) from said plurality of error phasors ($F_i$);
- a computing module (150) configured to compute from said filtered phasor ($F_{av}$) the second estimated phase error ($\phi_{e\text{-}n}$) associated with one of said symbols of the sequence.

**3.** The estimation apparatus of claim 2, wherein said average filtering module (149) is configured to compute the filtered error phasor ($F_{av}$) as an average phasor of the plurality of error phasors ($F_i$).

**4.** The estimation apparatus of claim 3, wherein said average filtering module (149) is implemented by a FIR filter.

**5.** The estimation apparatus of claim 2, wherein said second phase error estimation module (140) is configured to implement a Viterbi and Viterbi phase estimation algorithm.

**6.** The estimation apparatus of claim 1, wherein said first phase error estimation module (139) is configured to implement a Maximum Likelihood Phase Search algorithm.

**7.** The estimation apparatus of claim 6, wherein the first phase error estimation module (139) comprises:

- a plurality of test phase blocks ($TP_0\text{-}TP_{B\text{-}1}$) structured to provide a plurality of error values ($\mathbf{e_{n,0}}$, $\mathbf{e_{n,B\text{-}1}}$) and a corresponding plurality of estimated phasors ($\hat{X}_{n,0,\dots}$ $\hat{X}_{\mathbf{n,b}}$, $\dots\hat{X}_{n,B\text{-}1}$) associated with said set of test phase values;
- a minimum evaluation module (142) structured to determine a minimum error value among said plurality of error values ($\mathbf{e_{n,0}}$, $\mathbf{e_{n,B\text{-}1}}$);
- a selector module configured to provide a selected first estimated phase error ($\hat{\varphi}_i$) associated with an estimated phasor of the plurality of estimated phasors and associated with said minimum error value.

**8.** The estimation apparatus of claim 7, wherein at least one of the plurality of test phase blocks ($TP_0\text{-}TP_{B\text{-}1}$) comprises:

- a phase rotation module (143) configured to generate a phase rotated phasor by rotating of a test angle ($\varphi_b$) an input phasor of said sequence of symbols ($X_i$)
- a decision block (144) structured to provide from the phase rotated phasor an estimated phasor ($\hat{\boldsymbol{X}}_{n,0}, ...$) ;
- a differential module (145, 146) configured to provide a difference value ($d_{n,b}$ ; $|\boldsymbol{d}_{n,b}|^2$) from the phase rotated phasor and the estimated phasor ($\hat{\boldsymbol{X}}_{n,0}$);
- a filtering module (147) configured to generate an error value ($\boldsymbol{e}_{n,b}$) of said of plurality of error values ($\boldsymbol{e}_{n,0}$, $\boldsymbol{e}_{n,B-1}$) by filtering a plurality of difference values ($d_{n,b}$) generated by the differential module (145, 146) and associated with said sequence of symbols.

9. The estimation apparatus of claim 8, wherein said filtering module (147) is configured to mitigate an effect of noise present on the sequence of symbols on said of plurality of error values.

10. The estimation apparatus of claim 9, wherein said filtering module (147) is a Finite Impulse Response filter or a moving average filter or comprises a cascade of moving average filters.

11. The estimation apparatus of claim 1, wherein said first phase error estimation module (139) is configured to operate according to a pilot-based carrier phase estimation and comprises:

   - a complex multiplier (160) configured to multiply said sequence of symbols with pilot symbols and provide a resulting sequence of samples;
   - a filter (161) configured to filter the resulting sequence of symbols to obtain a filtered sequence of samples;
   - a phase extracting module (162) to extract from the filtered sequence of samples said first estimated phase errors ($\hat{\varphi}_i$).

12. The estimation apparatus of claim 1, wherein said input is configured to receive the sequence of symbols ($X_i$) according to a PM-QAM format.

13. A carrier phase estimation method comprising:

   - receiving from a digital module (134) of a coherent optical receiver (100) a sequence of symbols ($X_i$) representable by phasors, said phasors associated with said symbols ($X_i$) defining a set of phase values having a cardinality M;
   - generating first estimated phase errors ($\hat{\varphi}_i$) associated with said sequence of symbols by performing a comparison with a set of test phase values ($\{\varphi_0, ... (\varphi_b, ... , \varphi_{B-1}\}$) having a cardinality B lower than said cardinality M;
   - generating a second estimated phase error ($\phi_{e-n}$) by an average filtering based on said first estimated phase errors ($\hat{\varphi}_i$).

14. The carrier phase estimation method of claim 13, wherein generating a second estimated phase error comprises:

   - converting said first estimated phase errors ($\hat{\varphi}_i$) into a plurality of error phasors ($F_i$);
   - filtering said plurality of error phasors ($F_i$) to obtain a filtered error phasor ($F_{av}$);
   - computing from said filtered phasor ($F_{av}$) the second estimated phase error ($\phi_{e-n}$) associated with a respective symbol of said sequence of symbols.

EP 3 110 043 A1

FIG.1

EP 3 110 043 A1

FIG.2

FIG.3

EP 3 110 043 A1

FIG.4

FIG.5

FIG.6

FIG.7

EP 3 110 043 A1

$X_n$

160

161

162

$P_n$

$\langle\hat{\varphi}_n$

FIG.8

Europäisches
Patentamt

European
Patent Office

Office européen
des brevets

## EUROPEAN SEARCH REPORT

Application Number

EP 15 30 5959

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PFAU T ET AL: "Phase-Noise-Tolerant Two-Stage Carrier Recovery Concept for Higher Order QAM Formats", IEEE JOURNAL OF SELECTED TOPICS IN QUANTUM ELECTRONICS, IEEE SERVICE CENTER, PISCATAWAY, NJ, US, vol. 16, no. 5, 1 September 2010 (2010-09-01), pages 1210-1216, XP011337403, ISSN: 1077-260X, DOI: 10.1109/JSTQE.2009.2034472 | 1,14 | INV. H04B10/61 |
| Y | * Section II and Section III-B; page 1 - page 2 * * figure 1 * * figure 3 * | 2-13,15 | |
| X | US 2011/217043 A1 (PFAU TIMO J [US]) 8 September 2011 (2011-09-08) | 1,14 | |
| Y | * paragraph [0035] * * paragraph [0037] - paragraph [0038] * * paragraph [0041] * * paragraph [0048] - paragraph [0050] * * figures 3-6 * | 2-13,15 | TECHNICAL FIELDS SEARCHED (IPC) |
| Y | EP 2 169 867 A1 (ALCATEL LUCENT [FR]; INST NAT RECH INF AUTOMAT [FR]) 31 March 2010 (2010-03-31) * paragraph [0092] * * figure 16 * | 2-13,15 | H04B |

-/--

The present search report has been drawn up for all claims

| Place of search | Date of completion of the search | Examiner |
|---|---|---|
| Munich | 4 December 2015 | Inan, Beril |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

Europäisches
Patentamt

European
Patent Office

Office européen
des brevets

**EUROPEAN SEARCH REPORT**

Application Number

EP 15 30 5959

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | IRSHAAD FATADIN ET AL: "Laser Linewidth Tolerance for 16-QAM Coherent Optical Systems Using QPSK Partitioning", IEEE PHOTONICS TECHNOLOGY LETTERS, IEEE SERVICE CENTER, PISCATAWAY, NJ, US, vol. 8, no. 9, 1 May 2010 (2010-05-01), pages 631-633, XP011303451, ISSN: 1041-1135 * Second paragraph of Introduction.; page 1, column 1 * ----- | 2-13,15 | |

TECHNICAL FIELDS
SEARCHED      (IPC)

The present search report has been drawn up for all claims

| Place of search | Date of completion of the search | Examiner |
|---|---|---|
| Munich | 4 December 2015 | Inan, Beril |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

&  : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 15 30 5959

This annex lists the patent family members relating to the patent documents cited in the above-mentioned European search report.
The members are as contained in the European Patent Office EDP file on
The European Patent Office is in no way liable for these particulars which are merely given for the purpose of information.

04-12-2015

| Patent document cited in search report | | Publication date | Patent family member(s) | Publication date |
|---|---|---|---|---|
| US 2011217043 | A1 | 08-09-2011 | NONE | |
| EP 2169867 | A1 | 31-03-2010 | NONE | |

For more details about this annex : see Official Journal of the European Patent Office, No. 12/82

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **A. LEVEN et al.** Frequency estimation in intradyne reception. *Photonics Technology Letters,* 2007, vol. 19, 366-368

- **A. J. VITERBI ; A. M. VITERBI.** Nonlinear estimation of PSK-modulated carrier phase with application to burst digital transmission. *IEEE Trans. Inform. Theory,* July 1983, vol. 29, 543-551